# EUROPEAN PATENT SPECIFICATION

(11) **EP 3 237 804 B1**
(45) Date of publication and mention of the grant of the patent: **22.04.2020**
(21) Application number: 15830867.6
(22) Date of filing: 24.12.2015
(51) Int. Cl.: F23R 3/28, F02C 7/22, F16L 37/23

(54) **A COMBUSTION ASSEMBLY COMPRISING A FUEL SUPPLY SYSTEM WITH A QUICK SNAP-FIT FUEL FEED COUPLING FOR A GAS TURBINE COMBUSTION CHAMBER**
VERBRENNUNGSANLAGE MIT EINEM KRAFTSTOFFVERSORGUNGSSYSTEM MIT SCHNELL EINRASTENDER KRAFTSTOFFZUFUHRKUPPLUNG FÜR EINE GASTURBINENBRENNKAMMER
ASSEMBLAGE DE COMBUSTION AVEC UN SYSTÈME D'ALIMENTATION EN CARBURANT À ACCOUPLEMENT D'ALIMENTATION EN CARBURANT À ENCLIQUETAGE RAPIDE POUR CHAMBRE DE COMBUSTION À TURBINE À GAZ

(30) Priority: 24.12.2014 IT MI20142249
(43) Date of publication of application: 01.11.2017
(73) Proprietor: Ansaldo Energia S.p.A., 16152 Genova (IT)
(72) Inventor: GALELLA, Rocco, 16151 Genova (IT); PASTORINO, Pierpaolo, 16125 Genova (IT)
(74) Representative: Andreotti, Erika
(86) International application number: PCT/IB2015/059978
(87) International publication number: WO 2016/103230

(56) References cited:
- EP-A1- 0 013 393
- US-A- 5 197 288
- US-A1- 2006 000 220

## Description

### TECHNICAL FIELD

The present invention relates to a The present invention relates to a combustion assembly for a combustion chamber comprising a fuel supply system.

### BACKGROUND ART

Electric power plants usually comprise a compressor, inside which an airstream flows, a combustion chamber supplied with fuel and air coming from the compressor, a gas turbine inside which gases coming from the combustion chamber flow and a generator, mechanically connected to a same shaft of the gas turbine and the compressor and connected to an electricity distribution network.

Plants of this type are disclosed, for example, in documents US 2006/000220, US 5197288, EP 0013393. Particularly, US 2006/000220 discloses the features specified in the preamble of claim 1.

The combustion chamber comprises a plurality of burners supplied with fuel via a dedicated fuel supply system. The fuel supply system comprises a plurality of feed lines, which connect the burners to respective fuel supply manifolds.

The fuel can be constituted by natural gas, syngas, fuel oil and water, or otherwise.

The fuel supply system comprises a plurality of threaded connection elements that connect the fuel feed pipes to the burners and the manifolds.

The installation of this type of fuel supply system requires that the connection elements are subjected to specific tightening operations and a consequent check procedure on the tightening torque and, finally, a sealing test by feeding a leak-detection liquid while the plant is operating at low capacity.

These operations are essential and necessary for ensuring the sealing in known types of fuel supply systems. These activities often require significant time, even to the point of sometimes requiring several days dedicated to on-site technical tests.

Moreover, in the case of annular type combustion chambers, the tightening torque check procedure is particularly difficult because it requires the use of opportunely sized torque wrenches for reaching all of the connection elements.

### DISCLOSURE OF INVENTION

It is therefore an object of the present invention to provide a combustion assembly that is simple to manufacture, quick to install and, at the same time, reliable.

In accordance with these objects, the present invention relates to a combustion assembly as claimed in claim 1.

### BRIEF DESCRIPTION OF THE DRAWINGS

Further characteristics and advantages of the present invention will become clear from the description that follows of a non-limitative embodiment, with reference to the figures in the accompanying drawings, in which:
- Figure 1 is a perspective view, with parts removed for clarity, of the combustion assembly according to the present invention, comprising a combustion chamber and a fuel supply system configured to supply fuel to the combustion chamber;
- Figure 2 is a side view, with parts in section and parts removed for clarity, of a detail of the fuel supply system in Figure 1 in a first operational configuration; and
- Figure 3 is a side view, with parts in section and parts removed for clarity, of a detail of the fuel supply system in Figure 1 in a second operational configuration.

### BEST MODE FOR CARRYING OUT THE INVENTION

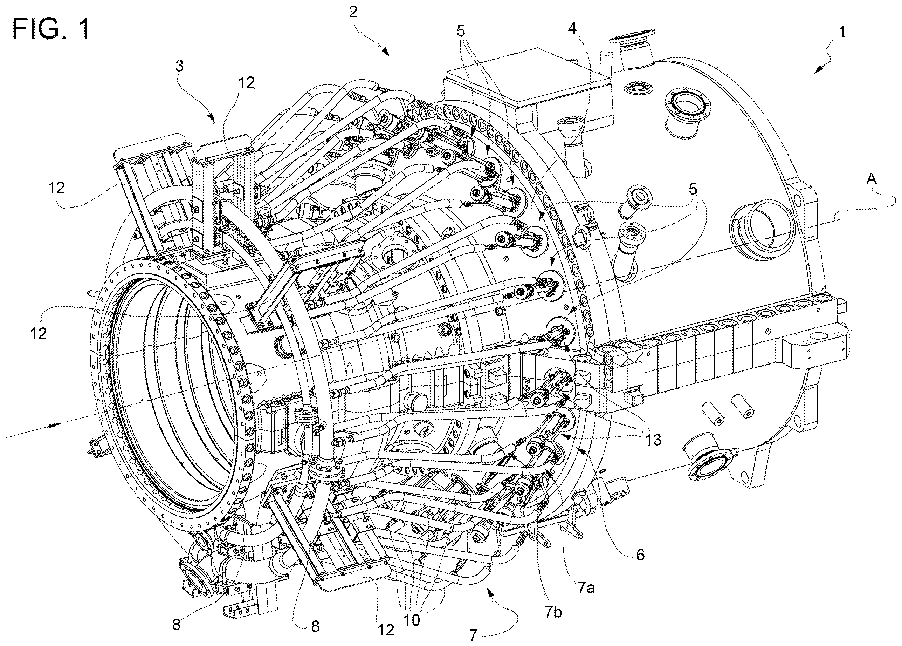

In Figure 1, reference numeral 1 indicates a combustion assembly comprising a combustion chamber 2 extending along a longitudinal axis A and a fuel supply system 3 configured to supply fuel to the combustion chamber 2.

The combustion chamber 2 and the fuel supply system 3 are partially and schematically shown in Figure 1.

In the non-limitative example described and illustrated herein, the combustion chamber 2 is of the annular type and comprises a chamber 4 and a plurality of burner assemblies 5 arranged along a circular path close to an annular peripheral rim 6 of the chamber 4.

In the non-limitative example described and illustrated herein, there are twenty-four burner assemblies 5.

Each burner assembly 5 comprises at least a pilot burner and a premix burner (not visible in the accompanying figures) connected to the fuel supply system 3. A variant, which is not shown, contemplates that each burner assembly 5 also comprises a diffusion burner and/or a liquid fuel burner (of diesel fuel for example).

The fuel supply system 3 comprises a plurality of fuel feed lines 7. In the non-limitative example described and illustrated herein, there are two feed lines 7: a pilot gas feed line 7a and a premix gas feed line 7b.

Each feed line 7 comprises a respective manifold 8 and a plurality of connecting pipes 10, each of which is connected to the manifold 8 and a respective burner assembly 5.

Each manifold 8 extends along an annular path external to the chamber 4 and is supported by the chamber 4. Preferably, the manifold 8 of each feed line 7 has a circular shape and is supported concentrically with the annular manifolds 8 of all the other feed lines 7 by a plurality of mounting brackets 12 that radially project from the outside of the chamber 4 and support all the annular manifolds 8 substantially in a same axial mounting position on the chamber 4.

The connecting pipes 10 are preferably flexible and without rigid sections, and are arranged externally to the chamber 4.

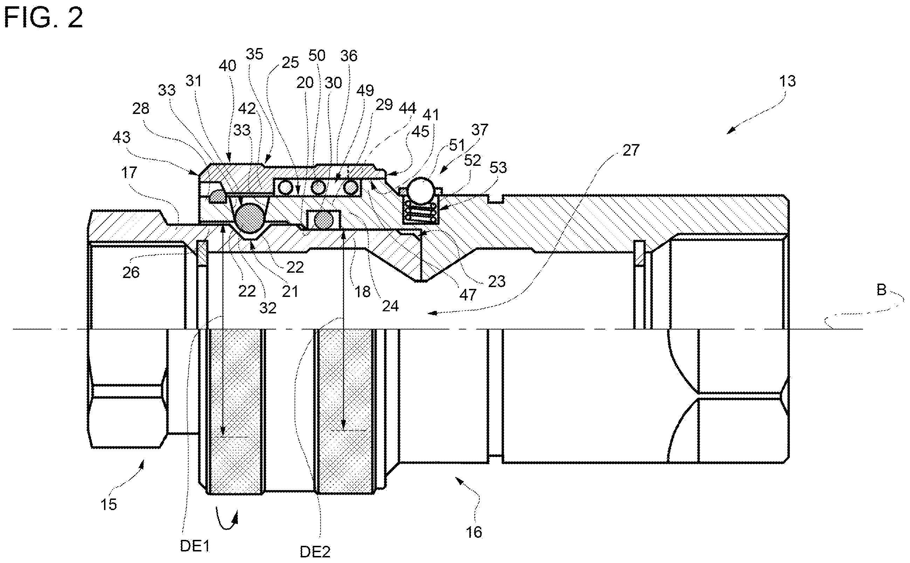

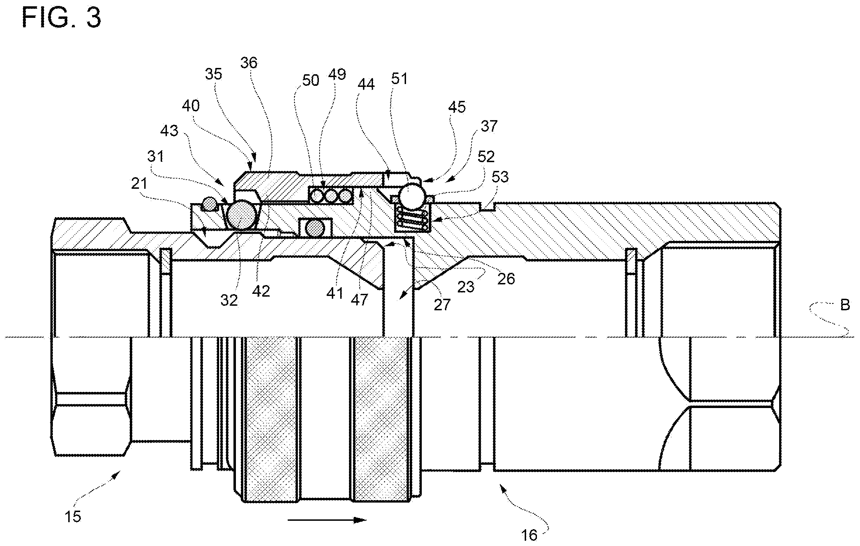

Each connecting pipe 10 is connected to the respective burner assemblies 5 by a quick-coupling connecting element 13 (better seen in Figures 2 and 3).

With the expression "quick-coupling", it is intended that the connecting element 13 is configured to couple the respective connecting pipe 10 to the respective burner assembly 5 in a rapid and tool-free manner.

For example, the connecting element 13 could be configured to define a snap-fit coupling, an interference coupling, a coupling that integrates a snap-fit coupling with a threaded coupling, etc.

In the non-limitative example described and illustrated herein, the coupling defined by the connecting element 13 is of the snap-fit type.

With reference to Figure 2, the connecting element 13 comprises a male connector 15 and a female connector 16 connectable to each other and shaped so as to define a snap-fit coupling.

In particular, the male connector 15 and the female connector 16 are configured so as to define a stable coupling in a locking position.

The male connector 15 comprises a first tubular connecting portion 17, extending along an axis B and having an external diameter DEI, and a second tubular connecting portion 18, concentric with the first tubular connecting portion 17 and having an external diameter DE2.

The external diameter DE1 of the first tubular connecting portion 17 is greater than the external diameter DE2 of the second tubular connecting portion 18.

The difference in diameter between the first tubular connecting portion 17 and the second tubular connecting portion 18 defines a step 20, which is designed to cooperate with a respective stop of the female connector 16, as will be seen further on.

The first tubular connecting portion 17 and the second tubular connecting portion 18 are designed to be inserted, in use, into the female connector 16.

An annular groove 21 present along the outer surface of the first tubular connecting portion 17 is designed to cooperate with a respective element of the female connector 16, as will be seen in greater detail further on.

Preferably, the annular groove 21 has inclined lateral walls 22 diverging towards the outer surface of the tubular connecting portion 17.

Preferably, the second tubular connecting portion 18 has a chamfered annular outer edge 23.

The female connector 16 comprises a tubular wall 24, which has an outer face 25 and an inner face 26, which defines a housing seat 27.

The tubular wall 25 comprises a first portion 28 having an internal diameter slightly larger than the diameter DE1 of the first tubular connecting portion 17 of the male connector 15 and a second portion 29 having an internal diameter slightly larger than the diameter DE2 of the second tubular connecting portion 18 of the male connector 15.

The change in diameter between the first portion 28 and the second portion 29 defines a stop 30 designed to abut against the step 20 of the male connector 15.

The dimensions of the first portion 28 and the second portion 29 of the tubular wall 25 of the female connector 16 allow easy insertion of the male connector 15 into the housing seat 27.

The female connector 16 comprises an annular recess 31 along the inner face 26 of the first portion 28 and an annular elastic element 32, which is housed in the recess 31.

The annular elastic element 32 has a radial height larger than the radial height of the annular recess 31.

Preferably, the annular recess 31 extends from the inner face 26 to the outer face 25 and comprises two lateral walls 33, which converge towards the inner face 26 of the tubular wall 25 so as to allow the annular elastic element 32 to partially protrude from the annular recess 31 and prevent it from coming out completely.

The annular elastic element 32 is preferably defined by an open annular element made of an elastic material, for example, rubber or polymers.

The portion of annular elastic element 32 that protrudes from the annular recess 31 is able to engage, in the locking position, the respective annular groove 21 of the male connector 15 as shown in Figure 2.

During use, it is sufficient to push the male connector 15 along axis B to achieve insertion of the male connector 15 in the housing seat 27. This insertion causes displacement of the annular elastic element 32 inside the annular recess 31 of the female connector 16 (Figure 3). The displacement of the annular elastic element 32 is facilitated by the chamfered shape of the outer edge 23 of the second tubular connecting portion 18 of the male connector 15.

When the male connector 15 reaches the locking position, the portion of annular elastic element 32 that protrudes from the annular recess 31 engages the respective annular groove 21 (Figure 2). In this locking position, relative movements between the male connector 15 and the female connector 16 are not possible in the axial direction and in the radial direction.

To uncouple the male connector 15 from the female connector 16, it is sufficient to exert a pulling force on the male connector 15, substantially along axis B. The pulling force must be sufficient to overcome the elastic resistance of the annular elastic element 32 and to cause the annular elastic element 32 to be pushed inside the annular recess 31.
Each connecting element 13 is also equipped with a security device 35, which prevents accidental uncoupling between male connector 15 and female connector 16.

In particular, the security device 35 is configured to selectively enable uncoupling between male connector 15 and female connector 16.

In detail, the security device 35 is configured to assume a lock position, wherein uncoupling between male connector 15 and female connector 16 is prevented and an unlock position, wherein uncoupling between male connector 15 and female connector 16 is enabled.

Passage from the lock position to the unlock position is made manually.

In the lock position shown in Figure 2, the security device 35 is configured to prevent complete insertion of the annular elastic element 32 inside the annular recess 31 of the female connector 16. In this way, even when a pulling force is exerted on the male connector 15, the annular elastic element 32 prevents uncoupling by being housed in the respective annular groove 21.

In the unlock position shown in Figure 3, the security device 35 assumes a configuration that enables the complete insertion of the annular elastic element 32 inside the annular recess 31 of the female connector 16. In this way, the annular elastic element 32 completely frees the respective annular groove 21 and application of a pulling force on the male connector 15 causes uncoupling between male connector 15 and female connector 16.

In the non-limitative example described and illustrated herein, the security device 35 comprises a ring 36 arranged externally to the female connector 16 and a lock element 37, which protrudes from the outer face 25 of the female connector 16.

The ring 36 has an annular shape and is substantially fitted around the female connector 16 so as to turn about the female connector 16.

The ring 36 is provided with an annular outer face 40 and an annular inner face 41.

The ring 36 is provided with an annular rib 42, which protrudes from the annular inner face 41 substantially at the first external edge 43 of the ring 36, and a recess 44 (broke line in Figure 2 and visible in Figure 3), substantially U-shaped and made along a second external edge 45, opposite to edge 43.

In the non-limitative example described and illustrated herein, the female connector 16 is preferably provided with an annular detent 47, which protrudes from the outer face 25.

The ring 36 is preferably arranged around the female connector 16 in such a way that the portion of the annular inner face 41 that comprises the second edge 45 is arranged resting against the outer surface of the annular detent 47 and in such a way that the annular rib 42 is arranged substantially resting along the outer face 25 of the female connector 16.

The security device 35 is configured in such a way that in the lock position, the annular rib 42 is arranged substantially resting along the outer face 25 of the female connector 16 at the annular recess 31 so as to prevent complete insertion of the annular elastic element 32 inside the annular recess 31 of the female connector 16 and to consequently prevent uncoupling between male connector 15 and female connector (configuration in Figure 2).

The security device 35 is also configured in such a way that in the unlock position, the annular rib 42 is arranged substantially resting along the outer face 25 of the female connector 16 in a position so as not to prevent complete insertion of the annular elastic element 32 inside the annular recess 31 of the female connector 16 and to consequently enable uncoupling between male connector 15 and female connector (configuration in Figure 3).

Passage from the lock position to the unlock position is achieved by turning the ring 36 until the recess 44 of the second edge 45 is aligned with the lock element 37 (arrow shown in Figure 2) and by moving the ring 36 axially in such a way that the lock element 37 engages the recess 44. In this way, the axial travel of the ring 36 is sufficient to free the annular recess 31 from the annular rib 42 of the ring 36 (arrow shown in Figure 3). The axial displacement of the ring 36 without turning the ring 35 to align the recess 44 with the lock element 37 is not sufficient to free the annular recess 31 from the annular rib 42 of the ring 36.

The particular shape of the ring 36 and the female connector 16 cause an annular seat 49 to be created between the annular rib 42 and the annular detent 47, inside which a spring 50 is preferably housed.

In use, the spring 50 ensures the return of the ring 36 to the lock position as soon as the manual pushing action ceases. In this way, the security of the coupling between male connector 15 and female connector 16 is ensured.

The lock element 37 protrudes from the outer face 25 of the female connector 16 downstream of the annular detent 47.

Preferably, the lock element 37 comprises a sphere 51 coupled to a spring 52, which entirely housed in a seat 53 of the outer face 25 of the female connector 16 and is able to support and push the sphere 51 outwards. In this way, the locking action of the sliding of the ring 36 is ensured by the lock element 37.

Preferably, the male connector 15 is coupled to the respective connecting pipe 10, while the female connector 16 is coupled to the respective burner assembly 5.

Obviously, a variant contemplates that the male connector 15 is coupled to the respective burner assembly 5 and that the female connector 16 is coupled to the respective connecting pipe 10.

One variant, which is not shown, contemplates the use of connection adapters between the connecting pipes 10 and the male connectors 15 and between the burner assemblies and the female connectors 16.

A further variant, which is not shown, contemplates that the connecting pipes 10 are connected to the respective manifold 8 by further connecting elements substantially identical to the connecting elements 13.

At least one sealing element 55 is preferably arranged between the male connector 15 and the female connector 16. In the non-limitative example described and illustrated herein, two sealing elements 55 are present.

The sealing elements 55 are defined by rings made of materials resistant to high temperatures and able to deform upon reaching certain temperatures so as to ensure optimal sealing. Preferably, the sealing elements 55 are made of rubber, preferably Viton® or Viton Extreme®.

Advantageously, use of the connecting elements 13 described above in the combustion assembly 1 according to the present invention accelerates installations times for the fuel supply system 3.

In particular, the times dedicated to connection of the connecting pipes 10 to the respective burner assemblies 5 and, if necessary, to the respective manifolds 8, are significantly reduced with respect to the installation times required by fuel supply systems of known type.

The connecting elements 13 are in fact subjected to sealing and resistance tests before being installed in the combustion assembly 1.

In particular, the connecting elements 13 are subjected to a series of sealing tests during the succession of heat cycles and a series of high-cycle fatigue tests, in which the connecting elements 13 are stressed with vibrations that simulate a life cycle of the sealing element 13.

Advantageously, the connecting elements 13 of the combustion assembly 1 according to the present invention are characterized by small dimensions. This enables reducing the curvature of the connecting pipes 10.

Lastly, the security device 35 with which all the connecting devices 13 of the fuel supply system 3 are equipped ensures that accidental opening of the connecting device 13 does not occur, thereby increasing the reliability of the fuel supply system 3.

Finally, it is clear that modifications and variations can be made to the combustion assembly 1 described herein without departing from the scope of the appended claims.

## Claims

1. A combustion assembly (1) for an electric power plant comprising a combustion chamber (2), provided with at least a burner assembly (5), and a fuel supply system (3) for supplying fuel to the combustion chamber (2); the fuel supply system (3) comprising at least a feed line (7) provided with:
- a manifold (8) supplied with fuel;
- at least a connecting pipe (10), which connects the manifold (8) to the respective burner assembly (5);
- a connecting element (13), which connects the connecting pipe (10) to the respective burner assembly (5) and/or the connecting pipe (10) to the respective manifold (8); the connecting element (13) being configured to define a quick coupling; wherein the connecting element (13) comprises a male connector (15) and a female connector (16) connectable to each other and shaped so as to define a quick coupling;
the combustion assembly (1) being **characterized in that** the connecting element (13) comprises a security device (35), configured to avoid accidental uncoupling of the connecting element (13); wherein the security device (35) is configured to assume a lock position, wherein uncoupling between male connector (15) and female connector (16) is prevented and to assume an unlock position, wherein uncoupling between male connector (15) and female connector (16) is enabled; the security device (35) comprising a ring (36) arranged externally to the female connector (16) and a lock element (37), which protrudes from the outer face (25) of the female connector (16); the ring (36) having an annular shape and being fitted around the female connector (16) so as to turn about the female connector (16); the ring (36) being provided with an annular outer face (40), with an annular inner face (41), with an annular rib (42), which protrudes from the annular inner face (41) substantially at a first external edge (43) of the ring (36), and with a recess (44) made along a second external edge (45), opposite to edge (43); the security device (35) being configured so as the passage from the lock position to the unlock position is achieved by turning the ring (36) until the recess (44) of the second edge (45) is aligned with the lock element (37) and by moving the ring (36) axially in such a way that the lock element (37) engages the recess (44).

2. A combustion assembly according to claim 1, wherein the connecting element (13) is configured to define a snap-fit coupling.

3. A combustion assembly according to claim 1, wherein the passage from the lock position to the unlock position of the security device (35) is to be made manually.

4. A combustion assembly according to any one of the foregoing claims, wherein the connecting pipe (10) is flexible.

5. A combustion assembly according to any one of the foregoing claims, comprising a plurality of feed lines (7).

## Patentansprüche

1. Brennkammeranordnung (1) für ein Elektrizitätswerk, umfassend eine Brennkammer (2) mit mindestens einer Brenneranordnung (5), und ein Brennstoffzuführsystem (3) zur Zuführung von Brennstoff in die Brennkammer (2); wobei das Brennstoffzuführsystem (3) mindestens eine Zuführleitung (7) umfasst, die mit Folgendem versehen ist:
- einem Verteiler (8), dem Brennstoff zugeführt wird;
- mindestens einem Verbindungsrohr (10), das den Verteiler (8) mit der entsprechenden Brenneranordnung (5) verbindet;
- einem Verbindungselement (13), welches das Verbindungsrohr (10) mit der entsprechenden Brenneranordnung (5) und/oder das Verbindungsrohr (10) mit dem entsprechenden Verteiler (8) verbindet; wobei das Verbindungselement (13) dazu dient, eine Schnellkupplung zu definieren; wobei das Verbindungselement (13) einen Steckverbinder (15) und eine Steckhülse (16) umfasst, welche miteinander verbindbar und so geformt sind, dass sie eine Schnellkupplung definieren;
wobei die Brennkammeranordnung (1) **dadurch gekennzeichnet ist, dass** das Verbindungselement (13) eine Sicherheitsvorrichtung (35) umfasst, die ein unbeabsichtigtes Entkoppeln des Verbindungselements (13) verhindert; wobei die Sicherheitsvorrichtung (35) dazu dient, eine Verriegelungsposition einzunehmen, in der das Entkoppeln zwischen dem Steckverbinder (15) und der Steckhülse (16) verhindert wird, und eine Entriegelungsposition einzunehmen, in der das Entkoppeln zwischen dem Steckverbinder (15) und der Steckhülse (16) ermöglicht wird; wobei die Sicherheitsvorrichtung (35) einen Ring (36) umfasst, der außenseitig an der Steckhülse (16) angeordnet ist, und ein Verriegelungselement (37), das von der Außenseite (25) der Steckhülse (16) vorragt; wobei der Ring (36) um die Steckhülse (16) herum angeordnet ist, so dass er sich um die Steckhülse (16) dreht; wobei der Ring (36) eine ringförmige Außenfläche (40), eine ringförmige Innenfläche (41), eine ringförmige Rippe (42), die von der ringförmigen Innenfläche (41) im Wesentlichen an einem ersten Außenrand (43) des Rings (35) vorragt, und eine Ausnehmung (44) aufweist, welche entlang einem zweiten Außenrand (45), dem Rand (43) gegenüberliegend, ausgebildet ist; wobei die Sicherheitsvorrichtung (35) so gestaltet ist, dass der Übergang von der Verriegelungsposition in die Entriegelungsposition erfolgt, indem der Ring (36) gedreht wird, bis die Ausnehmung (44) des zweiten Randes (45) mit dem Verriegelungselement (37) ausgerichtet ist, und indem der Ring (36) axial so bewegt wird, dass das Verriegelungselement (37) in die Ausnehmung (44) eingreift.

2. Brennkammeranordnung nach Anspruch 1, wobei das Verbindungselement (13) dazu bestimmt ist, eine Schnappverbindung zu definieren.

3. Brennkammeranordnung nach Anspruch 1, wobei der Übergang von der Verriegelungsposition in die Entriegelungsposition der Sicherheitsvorrichtung (35) manuell hergestellt wird.

4. Brennkammeranordnung nach einem der vorstehenden Ansprüche, wobei das Verbindungsrohr (10) elastisch ist.

5. Brennkammeranordnung nach einem der vorstehenden Ansprüche, umfassend eine Vielzahl von Zuführleitungen (7).

## Revendications

1. Ensemble combustion (1) d'une centrale électrique comprenant une chambre de combustion (2), doté au moins d'un ensemble brûleur (5), et d'un système d'approvisionnement en combustible (3) destiné à approvisionner la chambre de combustion (2) en combustible ; le système d'approvisionnement en combustible (3) comprenant au moins une canalisation d'approvisionnement (7) dotée :
- d'un distributeur (8) approvisionné en combustible ;
- d'au moins une canalisation de connexion (10), qui connecte le collecteur (8) à l'ensemble brûleur respectif (5) ;
- d'un élément connexion (13), qui connecte la canalisation de connexion (10) à l'ensemble brûleur respectif (5) ; et / ou la canalisation de connexion (10) au collecteur respectif (8) ; l'élément connexion (13) étant configuré pour définir un accouplement rapide ; où l'élément connexion (13) comprend un connecteur mâle (15) et un connecteur femelle (16) qui peuvent être raccordés l'un à l'autre et dont la forme permet de définir un accouplement rapide ;
l'ensemble combustion (1) étant **caractérisé en ce que** l'élément connexion (13) comprend un dispositif de sécurité (35), configuré afin d'éviter un désaccouplement accidentel de l'élément connexion (13) ; où le dispositif de sécurité (35) est configuré afin de prendre une position de blocage, qui permet d'empêcher un désaccouplement entre le connecteur mâle (15) et le connecteur femelle (16), et de prendre une position de déblocage, où un désaccouplement entre le connecteur mâle (15) et le connecteur femelle (16) est possible ; le dispositif de sécurité (35) comprenant une bague (36) agencée à l'extérieur du connecteur femelle (16) et un élément de blocage (37), faisant saillie à partir de la face extérieure (25) du connecteur femelle (16) ; la bague (36) présentant une forme annulaire et étant ajustée autour du connecteur femelle (16) afin de tourner autour du connecteur femelle (16) ; la bague (36) étant dotée d'une face extérieure annulaire (40), d'une face intérieure annulaire (41), d'une nervure annulaire (42), faisant saillie à partir de la face intérieure annulaire (41) sensiblement au niveau d'un premier bord extérieur (43) de la bague (36), et d'un renfoncement (44) réalisé le long d'un second bord extérieur (45), opposé au bord (43) ; le dispositif de sécurité (35) étant configuré afin que le passage de la position de blocage à la position de déblocage soit réalisé en tournant la bague (36) jusqu'à ce que le renfoncement (44) du second bord (45) soit aligné avec l'élément de blocage (37), et en déplaçant la bague (36) axialement de telle manière que l'élément de blocage (37) vienne en prise avec le renfoncement (44).

2. Ensemble combustion selon la revendication 1, où l'élément connexion (13) est configuré afin de définir un accouplement par pression.

3. Ensemble combustion selon la revendication 1, où le passage de la position de blocage à la position de déblocage du dispositif de sécurité (35) doit être fait manuellement.

4. Ensemble combustion selon l'une quelconque des revendications précédentes, où la canalisation de connexion (10) est souple.

5. Ensemble combustion selon l'une quelconque des revendications précédentes, comprenant une pluralité de canalisations d'approvisionnement (7).
